# EUROPEAN PATENT APPLICATION

(11) **EP 1 616 482 A2**
(43) Date of publication of application: **18.01.2006**
(21) Application number: 05106487.1
(22) Date of filing: 14.07.2005
(51) Int. Cl.: A01K 1/03, A22B 3/00

(54) **Laboratory animal housing with euthanizing function**

(30) Priority: 14.07.2004 US 890726
(71) Applicant: Thoren Caging Systems, Inc., Hazleton, PA 18201-0586 (US)
(72) Inventor: Drummond, Robert A., 18201-7511 Hazleton, PA (US); Lipman, Neil S., 10022 New York, NY (US)
(74) Representative: Olgemöller, Luitgard Maria

(57) **Abstract**

A high density animal housing system with an air source conduit (62) and an air exhaust conduit (64) is normally coupled to one or more ventilating animal cage racks (24) through standard inlet/outlet fittings. A euthanasia fixture is coupled into the standard inlet/outlet fittings and selectively and sequentially operates valves and/or blowers to switch from supply of respiration air to a gas supply, to open and close the flow to the exhaust and to resume ventilation afterwards, for venting. The sequence is timed and controlled by a programmable controller that activates the associated blowers and valves automatically to follow a user selected sequence. The system anesthetizes and then euthanizes the animals via the same flow conduits that otherwise supply respiration air, requiring no rack modifications and little if any human attention other than to couple the rack to the ventilation system at the euthanasia fixture. Operator inputs allow selection among sequences. Status sensing inputs prevent initiation or continuation of a cycle in the event of certain faults.

## Description

### Background of the Invention

### 1. Field of the Invention

The invention relates to the field of laboratory animal handling, providing an animal housing cage rack system with a euthanizing capability. The animals in all or part of a cage rack of the type that normally houses the animals can be asphyxiated by automatic staged displacement of cage air with CO₂ gas. In this way the animals are euthanized with minimal associated stress and without danger to human operators.

### 2. Prior Art

High density animal housing facilities are known, for example, from U.S. Patents 5,044,316; 4,690,100; 4,402,280; and 4,343,261, wherein small animals such as mice, rats, rabbits or the like are housed in molded plastic cage boxes that are supported on hollow shelves with integral air supply and air exhaust ducts. The cage boxes are supported on flanges under the shelves. Openings in the underside of the shelves allow the supply and exhaust ventilation air lines to be coupled through the open tops of the cage boxes, or in some embodiments couple through a filter cover or a valved lid that rests between the cage box and the underside of the associated shelf.

A lid or sealing filter cover between the cage box and shelf can help to seal the ventilation paths, but there is typically some leakage of ventilation air. It is possible to maintain the air pressure in such a cage rack at a higher or lower pressure than ambient atmospheric pressure. The result is some flow of leakage air, either outwardly from the cages into the surrounding air, or inwardly from the surrounding air into the cages.

The primary flow of air through the caging system originates at a preferably filtered supply, passes from the hollow ducted shelves through the cages and is extracted and exhausted or recirculated. Blowers upstream and downstream of the cage boxes can be employed. The pressure of the supply is balanced with the suction of the exhaust so as to maintain the cage internal pressure close to ambient pressure.

High density caging systems as described are particularly apt for laboratory experimentation involving a large number of individual animals that are subjected to experimental procedures or exist as control animals for purposes of comparison. In some facilities, quite a large number of animals are housed to support plural ongoing experiments.

In day-to-day maintenance of laboratory animals, in addition to ventilating the cages by means of a high density housing arrangement such as a cage rack, it is necessary to clean the cages, to change the bedding material, to provide supplies of food and water, etc. For animals such as rats and mice, this can be accomplished by removing a cage box from the rack onto a work surface, using forceps at the base of the tail to gently grasp and lift each of the animals bodily from the cage box into an adjacent clean cage box having new bedding material and supplies, and when all the animals have been transferred, replacing the cage box in the rack. This is accomplished with some excitement of the animals, but does not seem unduly traumatic. The animals are soon back with their familiar cohabitants in the familiar cage rack. The procedure becomes routine.

After an experiment has run its course or otherwise for animals that cannot be maintained, it may be necessary to euthanize the animals. For experimental subjects, for example, euthanasia may be a prerequisite to physical analyses associated with assaying experimental results. Insofar as animals may have participated in an experiment even as controls, euthanasia and physical analysis may be required for comparison with other subjects. Animals that may have lived through a given experiment are often unsuitable as subjects in a later experiment due to potential influence from the former experiment. Continued maintenance of such animals cannot be justified. In these circumstances and other similar circumstances, it may be necessary to euthanize the animals.

A common euthanasia technique, particularly for laboratory mice, is CO₂ gas overdose. However, the technique may be stressful to the animals. It is desirable that the animals not be traumatized. The CO2 gas technique also can be labor intensive, particularly where a large number of animals are to be euthanized.

US Pat. 4,941,431 - Anderson discusses prior art euthanizing techniques including asphyxiation using CO₂ gas. According to the patent, it has been known for this purpose to place a quantity of dry ice (frozen CO₂) into an animal cage of the type comprising an air impervious cage box. CO₂ gas that sublimes from the dry ice is more dense than air. The gas accumulates in the bottom of the cage, displacing oxygen and eventually immersing and asphyxiating the animals. This procedure requires processing of the cage boxes one at a time. Presumably the cage boxes are covered so that air currents do not diffuse the CO₂ gas from the cage box.

Dry ice is very cold and its use as a supply of CO₂ gas is considered likely to traumatize the animals. Use of dry ice for euthanasia is generally considered an unacceptable practice. Anderson uses a CO₂ gas supply from a gas cylinder, associated with a gas valve and timer that the operator adjusts and monitors. In Anderson, the pressurized gas is discharged into the cage box through a fitting in a cage box cover. It would appear that releasing gas pressure in this way would also substantially reduce the temperature of the gas, but at least there is no block of concentrated very cold CO₂ gas dry ice.

The Anderson technique is more humane than some other common euthanizing techniques, such as guillotining the animals one by one. Nevertheless, there is stress for the animals and work for the technician. Anderson teaches enclosing the animals in a box and airtight lid for application of the timed asphyxiation process. Although the animals might be processed in their individual home cage boxes, there is stress in removing the cage boxes from their normal location, sealing the gas fitting lid to each individual cage box in turn and proceeding with the timed process. Processing one box at a time is time consuming and inefficient for the operator, who is inclined to combine unfamiliar animals into one cage box for processing. Combining unfamiliar animals in a cage is stressful for the animals. One might extend Anderson to combining a number of cage boxes in some sort of sealed vault for application of the process, which would also be stressful for the animals and inefficient for the operator.

In an American Association of Laboratory Animal Science (AALAS) Abstract dated February 26, 2002, entitled "Implementation of a ventilated cage rack for efficient, humane euthanasia of mice," a technique is disclosed wherein a copper manifold pipe is attached to the air supply plenum at the end of a ventilating cage rack, and has nozzles of progressively different sizes arranged to emit CO₂ gas at different points along a flow path. According to the description, a cage rack that is partly or completely loaded with animal cages first is disconnected from the ventilation air supply arrangements. The air supply plenum at the end of the rack is opened and the manifold is clamped into place inside the plenum, so as to direct the nozzles toward the animal cages. The manifold is then coupled to a CO₂ gas supply that delivers gas at 30 psi, for a sufficient time to asphyxiate the mice. Afterwards, the clamped-in manifold is detached and removed.

The rack is reconnected to the ventilation air supply and operated to expel residual CO₂ gas.

The AALAS Abstract solution has certain advantages in that the animals can be asphyxiated in their "home" rack, presumably without stress. However, this advantage is achieved with substantial inconvenience for the operators, who are to disassemble the air supply and air plenum structures for each cage rack to be processed, modify the cage rack by installing a CO₂ gas emission apparatus, operate the CO₂ gas supply with sufficient pressure, flow and timing controlled manually, and finally to remove these arrangements afterwards. It would be advantageous to provide an automated apparatus whereby animals can be euthanized without unnecessary stress, in their usual cage boxes and cage racks together with the same animals as usual, without moving the animals either individually or by transporting animal cages to a euthanasia facility, and without disturbing equipment installation steps conducted while the animals are decoupled from their ventilation air supplies. It would be most inefficient to build all cage ventilation apparatus with a euthanasia capability, as well as expensive and prone to accidents, simply to avoid the need to stress the animals by relocating them if and when euthanasia became necessary. What is needed is a way to resolve these issues in a way that is optimally efficient and yet empathetic to the animals.

### Summary of the Invention

It is an object of the invention to provide at least a part of a high density animal cage rack, of the type having ventilation air aspects whereby air is normally passed through cage boxes, with the capability to euthanize occupants by displacement of ventilation air with a gas. A standard cage rack is coupled by its standard ventilation couplings to an automatically controlled gas supply apparatus operable to substitute euthanizing gas for ventilation air in a series of controlled operations.

It is an object in a euthanizing apparatus employing CO₂ gas for asphyxiation using standard ventilating cage racks, to effect a programmed cycle of steps in which controls require certain sensed operational conditions to commence or continue a euthanasia process, wherein the gas can be applied in a sequence of operations, optionally with selectable time and gas concentration conditions that are maintained automatically when commenced by a user selection and start control. The device automatically obtains an initial anesthetizing concentration, proceeds to time a lethal soak concentration wherein the flow of air or gas is stopped, and finally vents the cage rack by resuming ventilation air flow, all automatically.

It is a further object to ensure that the operation of the euthanizing apparatus is both effective with respect to the subjects, is reliable and repeatable, and is safe for the operators of the apparatus.

These and other objects are met in a high density animal housing system with a ventilation system having an air source conduit and an air exhaust conduit that normally supply air for respiration of the animals. The system is coupled to a controller that activates and deactivates associated blowers and valves so as to substitute CO₂ gas for ventilation air. In a programmed sequence the system first anesthetizes and then euthanizes the animals via that same flow conduits that otherwise supply respiration air. The sequence progresses through insufflation of the cages with gas, substituting the gas for inlet air over a timed interval while an exhaust blower continues to run. In a soak interval, the exhaust flow is discontinued. In a final venting phase the gas is flushed to the exhaust. Operator inputs can select among sequences. Status sensing inputs prevent initiation or continuation of a cycle in the event of certain faults.

The animal cages preferably are air impermeable boxes suspended from hollow shelves that define internal conduits for supply and exhaust of air, coupled to the supply and exhaust conduits. When initiating a euthanizing cycle, the supply air is discontinued and a gas, preferably CO₂ is supplied while continuing to operate the exhaust system for a defined period of time. This insufflates the system, i.e., increases the concentration of CO₂ gas in the cages, first anesthetizing the animals and eventually displacing oxygen to a lethal concentration of gas. After a user defined timed interval, the CO₂ gas supply preferably is shut off, and the exhaust system is stopped for a further timed "soak" interval. The cessation of ventilation currents permits the CO₂ gas, which is heavier than air, to settle without turbulence in the cages, displacing any oxygen and further increasing the CO₂ gas concentration while removing oxygen, in the areas occupied by the animals. After a soak interval timed so that all the affected animals have expired, the inlet is recoupled to ventilation air system, the CO₂ gas supply remains shut off and the exhaust is operated to permit the cages to be vented. The cages and animals can be removed safely.

The invention provides a device that substitutes CO₂ gas for the cage ventilation air in a cage rack, by coupling a low pressure CO₂ gas supply to the ventilation paths of a standard and unmodified cage rack. The user has the option to select from among a number of pre-programmed cycles or sequences of operation that are controllably executed by a programmed ventilation supply facility that is coupleable to the standard ventilation fittings of a standard cage rack. It is an easy matter, particularly with cage racks having caster wheel chassis, to remove and exchange a rack coupled to the euthanisation controlled ventilation supply facility, with a different standard rack that is wheeled into place. The ventilation/euthanizing hardware remains in place for use with any selected rack and the animals and animal cages need not be disturbed other than to wheel the rack to the facility and to couple the ventilation ports of the rack to those of the euthanizing hardware.

### Brief Description of the Drawings

There are shown in the drawings examples of certain embodiments of the invention. It should be understood that the invention is not limited to the examples shown in the drawings but is capable of other embodiments in accordance with the scope of the invention claimed. Like reference numerals denote like features throughout the specification and drawings. In the drawings,
Fig. 1 and Fig. 7 are schematic illustrations of a system according to the present invention, having a ventilated cage rack coupled to a controller operable to substitute CO₂ gas for ventilation air in all or part of a cage rack and thereby euthanize animals housed therein.
Fig. 2 and Fig. 8 are perspective illustrations of high density animal housing system to which the invention is advantageously applied, having internally ducted cage racks supporting animal cages and providing ventilation.
Fig. 3 and Fig. 9 are partial cutaway views showing the ventilation and exhaust conduits and illustrating the phases of ventilation, insufflation and CO₂ gas soaking that are established by the controller for timed periods.
Fig. 4 and Fig. 10 are perspective views showing an embodiment wherein a fixture containing the gas valves and controlled blowers used for the euthanasia procedure are detachably affixed atop a cage rack in place of ventilating connections.
Fig. 5 and Fig. 11 are detail views of the fixture shown in Figs. 4 and 10 and including the bracket for supporting the fixture when not deployed.
Fig. 6 and Fig. 12 are elevation views showing certain valve and sensing arrangements according to a preferred embodiment.

### Detailed Description

Carbon dioxide (CO₂) overdose is a known euthanasia technique and has been employed for mice as discussed in the background information above. Known techniques, for example as in US Pat. 4,941,431 - Anderson, process animals in air impervious cage boxes under a sealing cover containing gas fittings by which oxygen-displacing gas is injected into the cage box. Such a process of treating animals in units of cage boxes require that animals be moved into a cage box, or even if not move, that that cage boxes be removed individually from their normal environment as part of the process.

It may be stressful for animals to be displaced from their normal conditions. If moved into the same cage box the animals may become separated from their familiar cohabitant animals and mingled with strange animals. Moving the animals and/or processing cage boxes individually can be labor intensive and time consuming. The associated stress can excite the animals and complicate the procedure.

A more compassionate technique proposed in the above-cited AALAS Abstract entitled "Implementation of a ventilated cage rack for efficient, humane euthanasia of mice," proposes processing the animals in their familiar environs but requires that fixtures be installed in a rack when the animals are to be euthanized. The rack is not a standard rack and instead needs to be modified for euthanasia and then un-modified to be returned to service. According to an aspect of the present invention, however, a gas application apparatus is provided that can be coupled to a standard rack in lieu of direct connections to the air supply and exhaust conduits. The invention is applicable to the racks that normally are used to house the animals, especially of the type having internally ducted shelves to which cage boxes are coupled for supply and exhaust of ventilation air. The operational elements and the controls are associated with the gas application apparatus.

Additionally, the invention provides certain automatic sensing and control arrangements that prevent a euthanasia cycle from starting or continuing in the absence of certain minimum requirements, that time and sequence operations without user control other than to select and trigger the start of a cycle, and that provides follow-up venting procedures to protect humans in the area from potentially problematic concentration of CO₂ gas.

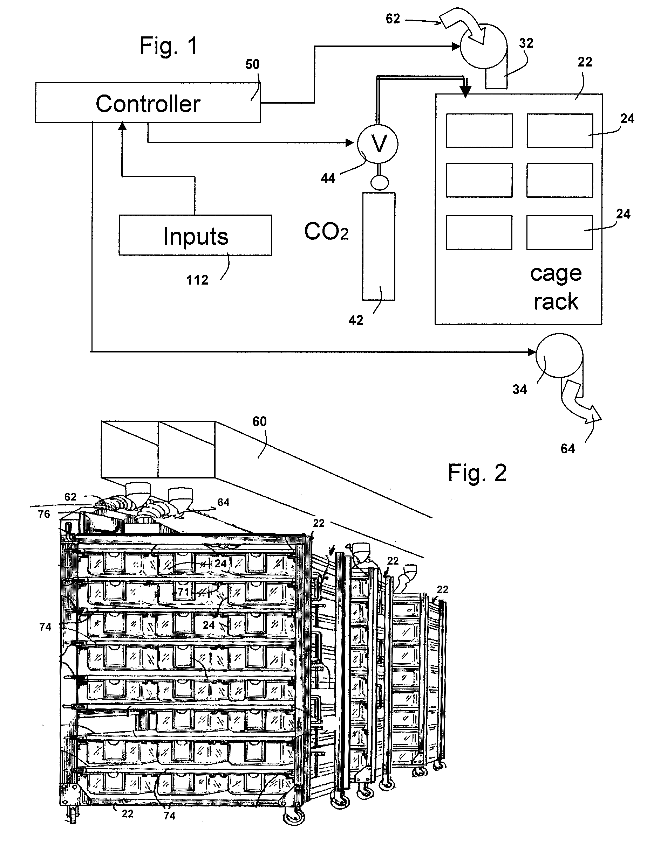

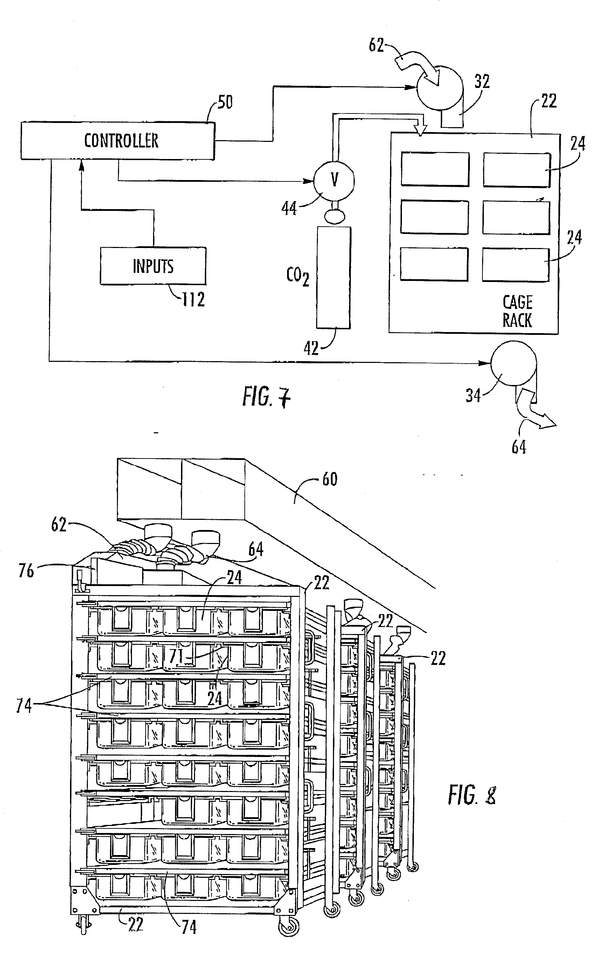

Figs. 1 and 7 illustrates the invention in block diagram form. A cage rack 22, shown schematically, carries a number of individual animal cages 24. The rack has internal ducting as explained hereinafter, to supply ventilation air for respiration and to pass spent air through to an exhaust. The ventilation air flow aspects are illustrated in Figs. 1 and 7 by a supply blower 32 and exhaust blower 34; however it should be appreciated that other types of relatively positively pressurized air source facilities and relatively negatively pressurized exhaust facilities can be used to produce a current of ventilation air for respiration.

According to an inventive aspect, a source 42 of CO₂ gas, shown schematically as a pressurized gas cylinder is coupled by a valve 44 to the air supply and is activated by a controller 50 to supply CO₂ gas to the cage rack in lieu of ventilation air for respiration. The CO₂ gas thereby displaces oxygen necessary for respiration and euthanizes the animals. Preferably the CO₂ gas is supplied in at least two phases and then flushed out, by switching from ventilation of the individual cages with room air (or a similar source containing oxygen) to CO₂ gas. The sequencing of the phases is fully automated.

Controller 50 can be a programmable logic controller (PLC), available from various suppliers including Allen Bradley, TI, GE, etc. The programmable controller operates to advance through states in which the outputs are varied as a function of inputs from switches and sensors, and the passage of time as determined by an internal clock. The inputs and outputs can involve switch closures, digital or analog signals and the like.

The controller 50 advances through phases including (1) a CO₂ gas insufflation phase during which the concentration of CO₂ gas is increased from ambient levels, progressively displacing oxygen; (2) a CO₂ gas exposure or soak phase in which the animals are exposed to the gas in a lethal concentration; and (3) a purge phase wherein the CO₂ gas is removed from the ventilated rack.

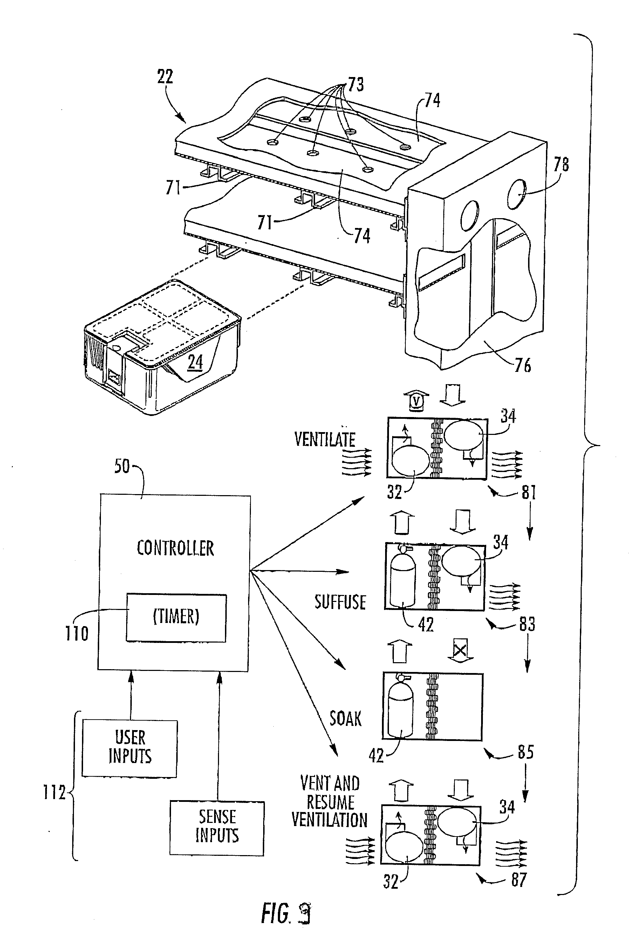

A shown in Figs. 2 and 8, in one embodiment the ventilated rack 24 is one of a number of racks used for the high density housing of laboratory animals. Each rack is normally coupled to ventilation facilities 60, for example including a supply conduit 62 and an exhaust conduit 64. These may be coupled to the rack through local blowers or directly, and may have associated valves and dampers (not shown) for balancing the supply pressure and exhaust suction.

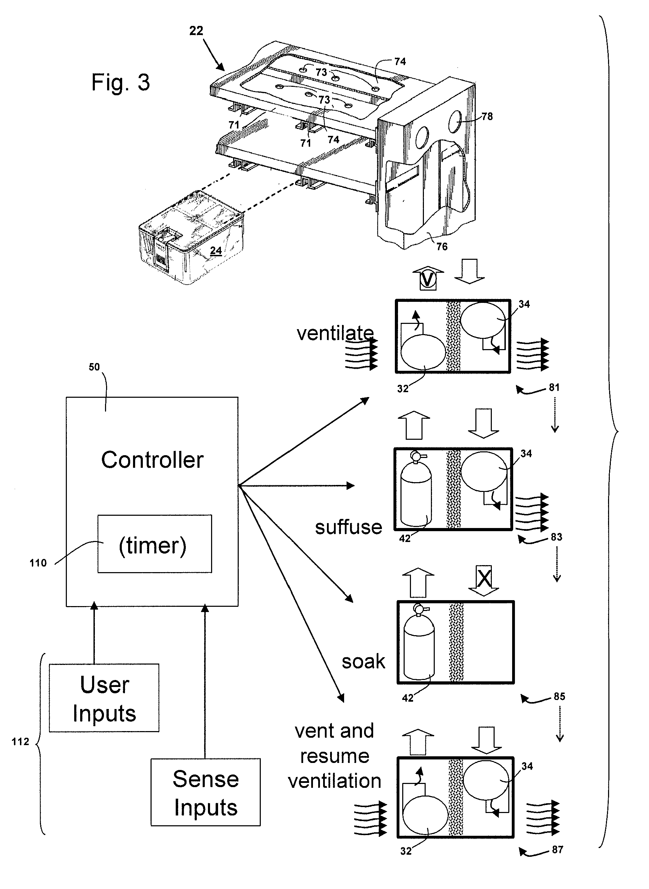

As shown cutaway in Figs. 3 and 9, each cage box 24 fits into a space in the rack 22, for example with flanges along the top edges of an air impervious box engaging flanges 71 for holding the boxes in position under openings 73 in shelves 74. The openings 73 lead into internal ducts for supply and exhaust that extend adjacent to one another along the length of the hollow shelves 74. The supply and exhaust ducts in the shelves are in communication with similar ducts in hollow end walls 76, and the end walls have openings or couplings 78 where coupled to powered supply and exhaust facilities. It is also possible to have the normal ventilation air supply from the ambient room air into the system, or to vent from the system into the ambient, but connections for remote supply and exhaust venting are preferred, as are powered local blowers and high performance particle filtering such as HEPA filters.

Figs. 3 and 9 illustrate an exemplary succession from the normal ventilation state 81 to the insufflation phase 83, soak phase 85 and resumed ventilation state 87.

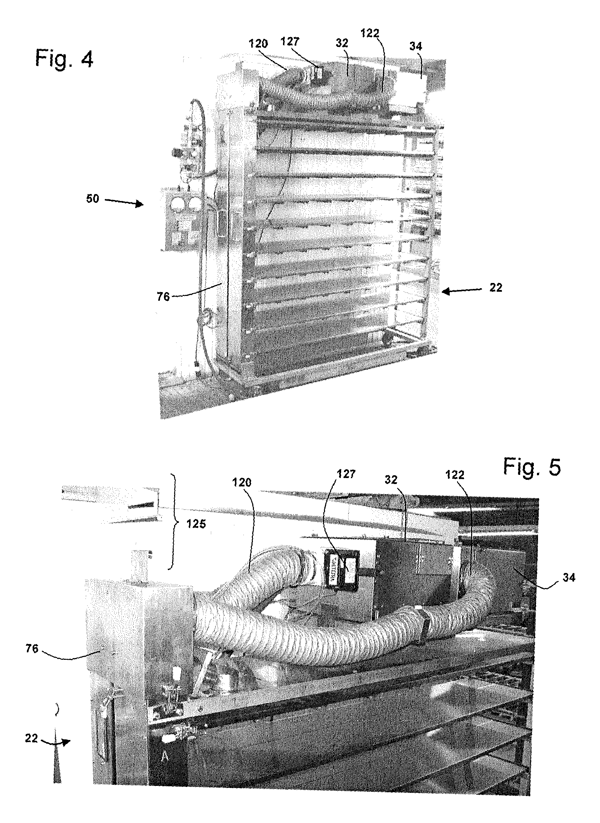

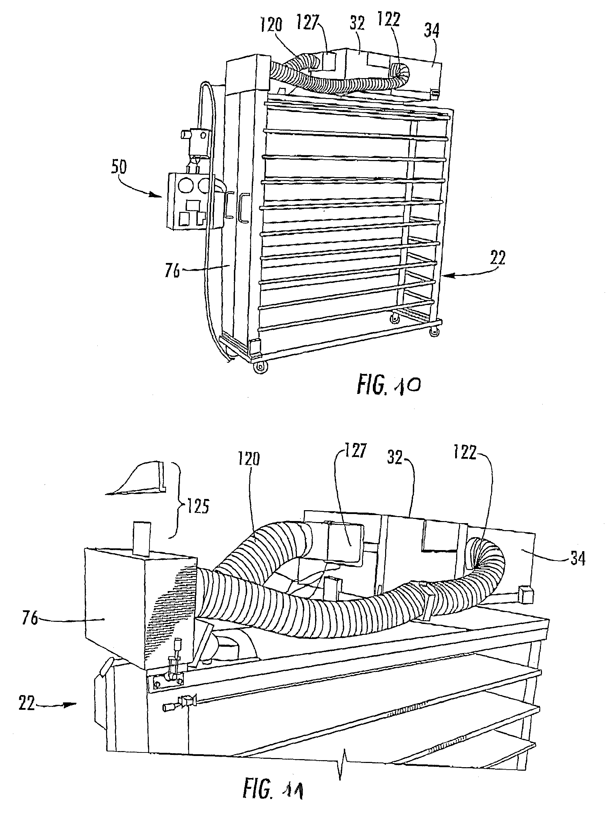

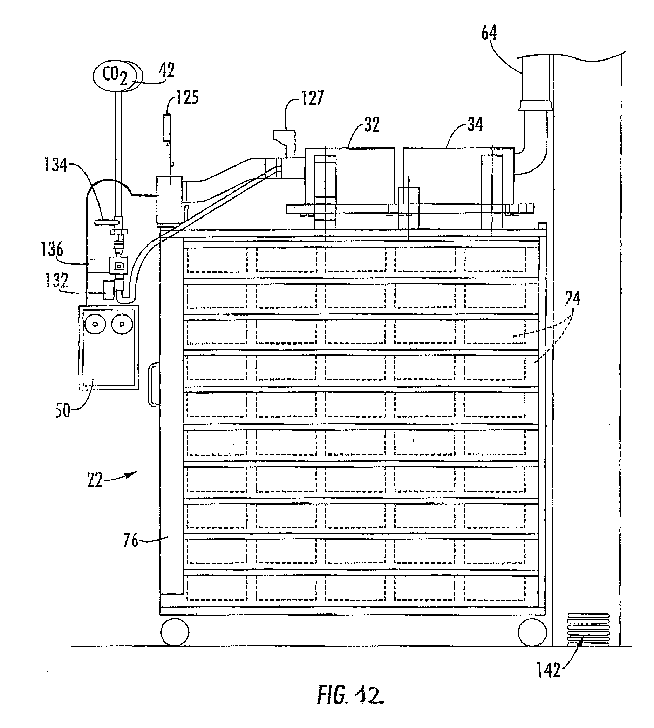

The invention can be applied to an animal housing system as an operating subsystem. Preferably, however, the euthanasia facilities are provided so as to coupled to a rack 22 when needed. Accordingly, a cage rack 24 as in Figs. 2 or 8 can be detached from its connections to conduits 62, 64, and wheeled into position for engagement with a detachable subsystem as shown in Figs. 4, 5, 10 and 11. The respective elements of the system as shown include the ventilation system having at least an air source conduit 62 and air exhaust conduit 64 sufficient for bringing supply air for respiration of animals and removing exhaust air. In an example as shown in Figs. 1 and 7, the cage rack or its detachable ventilation subsystem include one or more blowers 32, 34, preferably one for supply and one for exhaust.

The cage rack 24 supports a plurality of animal cages 22. The cages each comprise a box shaped enclosure with air impermeable material at least partly surrounding a housing area for the animals. The support rack and animal cages are configured such that when the cages 22 are placed in said support rack 24, the cages are coupled between the air source and air exhaust conduits 62, 64. In the embodiment shown, the cages are disposed in an ventilation air path that passes through hollow ducting in the cage rack, including the shelves, into the cages from supply opening in the shelves, and back from the cages into openings leading into the exhaust ducts in the shelves and in due course to the exhaust conduit 64. This route of air passing through the ventilation system is the same route whereby the cage rack 22 normally supplies occupants of the animal cages with air for respiration.

A supply of gas is coupled to the rack 22 in association with the air source flow path from the air inlet conduit 62. In the example of Figs. 1 and 7, the gas supply 42 is coupled through a controllable valve 44, which in turn is electrically controlled from the programmable controller 50. Controller 50 also controls the operation of the inlet and/or outlet blowers 32, 34 and any flow regulating valves that are operable to stop, wherein the controllable valve is operable to displace at least part of said air for respiration, for at least one of anesthetizing and asphyxiating said animals while disposed in said cages in said support rack.

In the preferred embodiment discussed, the composition used as the means for euthanizing the animals is CO₂ gas and the gas is introduced in stages. At first, the gas is introduced at a concentration effective to anesthetize the animals, i.e., to render the animals sleepy and then unconscious. The next stage is displace air from the cages to the extent that the concentration of CO₂ gas is lethal, and to hold the concentration for a sufficient time to asphyxiate the animals. The stages are timed by operation of the programmable controller 50.

The CO₂ gas is confined because the cages comprise impermeable boxes suspended from the hollow shelves with internal ducts or conduits that lead to the supply and exhaust conduits and blowers, but in a manner that is controllable by controller 50.

Although the exemplary supply of gas comprises pressurized CO₂ gas, other gases are not excluded, to be used instead of or in addition to the CO₂ gas. Other oxygen displacing gases such as nitrogen are possible. In order to further reduce stress in the animals nitrous oxide can be injected prior to the oxygen displacing gas. Nevertheless, CO₂ gas is advantageous because it is more dense than air. When the CO₂ gas is injected and air turbulence is stopped by decoupling the inlet and outlet flows, the CO₂ gas settles in the bottoms of the cage boxes to provide locally high concentrations of CO₂ gas and low concentrations of oxygen.

It is possible to commence and stop air flow in the embodiment shown in Gif. 1 simply by turning the blowers on or off. Additionally or instead of relying on stopped blowers to block gas flow, one or more electrically operated gate valves can be coupled to the controller at the inlet and outlet conduits 62, 64 for controllably coupling one of the respiration air and the supply of gas to the air source conduit. Likewise, check valves associated with the exhaust arrangements can ensure that in the venting phase the CO₂ gas is not released into the ambient air and instead is carried away. In the embodiment discussed below, additional safety elements for ensuring exhaust of the CO₂ gas include a thimble connection with the downstream exhaust conduits, and an optional supplementary exhaust inlet to remove air at a low elevation in the room, etc.

The controller is coupled at least to the controllable valve operable to inject the CO₂ gas, and also controls the blowers 32, 34 and/or associated valves to selectively activate and deactivate the air (or gas) flow into the ventilation pathways leading to the animal cages, as well as the exhaust flow from the cages to a downstream point of discharge. The controller is programmed and coupled to operate the blowers and/or valves in a series of successive operations, shown schematically in Fig. 3. For this purpose, the controller comprises a timer 110, for stepping through the series of successive operations in a timed sequence. The sequence can be more or less variable and programmed to effect two or more different cycles, selected by operation of switch inputs from user inputs 110, and/or as a function of sensed conditions of gas pressure, flow and the like via sense inputs 112.

In the embodiment shown in Figs. 3 and 9, the blowers 32, 34 are activated and deactivated by the controller, in order to start and stop flow. In this respect, stopping flow (halting or decoupling the respective blower) is equivalent to operating a gate valve to close off the associated air/gas passageway. The controller effects a coordinated activation and deactivation of flows in a sequence. The sequence comprises replacing ventilation air as the source of flow with the CO₂ or other operative gas for a sufficient time to render lethal the atmosphere in the animal cages. More particularly, starting from the state 81 of normal ventilation, the preferred sequence comprises timed periods of insufflation 83 wherein the concentration of CO₂ gas is increased, soak 85 wherein a lethal concentration is maintained for an effective period of time, and venting 87, wherein ventilation flow is resumed for a sufficient time to clear the CO₂ gas to the extent that it is safe to remove the cages 24 from the rack 22, and ensure that the process was effective, finally exposing the ambient atmosphere to the contents of the cages.

Advantageously, the time periods chosen are planned for initially anesthetizing the animals, i.e., rendering the animals unconscious before the concentration of CO₂ is such that the atmosphere is not breathable. This eliminates or substantially reduces stress on the animals.

Figs. 4 and 5 as well as Figs. 10 and 11 illustrate a practical embodiment of the invention. In this arrangement, the supply and exhaust blowers 32, 34 are normally kept suspended in a fixture that is removably coupled by flexible ducts 120, 122 to the cage rack 22, preferably to a hollow end wall 76 coupled to internally ducted shelves as also shown in Fig. 3. The arrangement can lowered from a hook and bracket arrangement 125 mounted on a building wall such that a rack 22 can be wheeled into position at which the fixture is conveniently deployed, e.g., at least the connecting portions and optionally also the blowers 32, 34, are lowered onto the cage rack. With power coupled to the blowers 32, 34 through the controller 50, normal ventilation ensues.

In the normal ventilation state, the animals move about in the cage box as they desire. The area under the incoming air orifice in the shelf duct is a preferred gathering place, apparently due to the ventilation air currents. A gas cycle begins by a user initiating a "start" input to controller 50 (e.g., selecting an operation and activating a key-operated switch). There is a brief interruption of the air stream as the air supply blower 32 is shut off. Preferably, the supply duct 62 is decoupled by closing a gate valve 127. Such a gate valve can be located upstream or downstream of the supply blower 32 and in the embodiment shown is between the supply blower and the ducting in the cage rack 22.

After the brief interruption, controller opens the CO₂ gas supply valve to insert CO₂ gas at a point downstream of the gate valve and leading into the air supply ducting in rack 22. The air stream into the individual cages resumes through the inlets 73, but now the incoming stream is CO₂ gas rather then air for respiration. Meanwhile, the exhaust blower 34 continues to operate.

The CO₂ gas stream mixes with the air in the cage boxes 24. Over a period of time of suffusing the cage boxes with CO₂ gas, more and more oxygen is displaced from the cage boxes. The concentration of CO₂ in the cages increases and the concentration of oxygen decreases. As the concentration of CO₂ gas increases, the gas acts as a general anesthetic, eventually putting the animals into a deep sleep. This phase is continued for a time sufficient to anesthetize the animals and to substantially replace the air in the cage boxes with CO₂ gas. Over a period of about two minutes, the cage box is progressively charged with CO₂ gas. There is some turbulence due to continuing flow. However, CO₂ gas is heavier than air, tending to accumulate in the bottoms of the cages and to float any remaining oxygen carrying air toward the tops of the cage boxes. The cage boxes are mounted underneath the ducted shelves. Thus the floating oxygen carrying air is extracted into the exhaust ducts as the CO₂ gas settles.

The foregoing insufflation phase is maintained for a sufficient time to replace the air in the cages with CO₂ gas. The period can be longer or shorter depending on the rate of gas supply and through current. Two minutes is an example. The controller 50 then steps to the next stage of operation, which is a soak or dwell phase during which the cage boxes are kept charged with lethal levels of CO₂ gas. In this soak phase, the controller 50 turns off the exhaust blower. The controller 50 can close the CO₂ gas supply valve 44 at the same time, leaving the cage boxes in a stagnant air condition with a high concentration of CO₂ gas. It is also possible to permit the CO₂ gas supply to remain open or to remain open for a time. The soak phase is timed to last, for example for 15 minutes, during which the dense CO₂ gas settles to the cage bottoms and the animals are completely euthanized by asphyxiation. Generally, the asphyxiation is complete in a shorter time, but it is advantageous to extend the soak phase for a more than sufficient time so as to euthanize the unconscious animals with a very high degree of effectiveness.

After the timed CO₂ gas soak interval, the controller 50 enters a purge or venting phase. The controller opens the air supply gate valve 127 and couples power to the exhaust blower 34. At the same time, or after a delay, the air supply blower 32 is powered as well. Operating the exhaust blower 34 before the supply blower for a time produces a negative pressure that tends to draw room air into the exhaust path, as well as air from the supply conduit 62, producing little or no leakage of CO₂ gas into the room. The CO₂ gas is discharged from the cages into the exhaust ducts. Preferably, the supply blower 32 is used for this venting phase, at least after a delay, so that the CO₂ gas is dependably flushed from the cage boxes into the exhaust. A timed interval of five minutes is generally sufficient to clear the CO₂ gas from the cage boxes. After the timed purge phase, the controller can operate a warning light or buzzer to indicate that the cycle has been completed. At that point, the cage boxes can safely be removed for processing of the euthanized animals.

In order to apply the present method and apparatus for euthanizing infant mice pups, relatively long soak periods are needed, optionally with periodic addition of CO₂ gas to keep up the necessary concentration. For natural reasons, infant mice are able to survive a relatively longer period of oxygen deprivation than adults. It is possible to provide user selection inputs via inputs 110 to select different cycles or to select specific time intervals for the respective operational phases. In any case, the controller is programmed to effect an insufflation phase wherein the supply of gas is substituted said air for respiration during a first time period that generally accomplishes general anesthesia, and a timed for distribution of the gas in a soak phase that generally asphyxiates the animal subjects.

In the embodiment of Figs. 4 and 5, the cage support rack is detachable from an existing set of air supply and air exhaust conduits 62, 64 and coupleable to a set of air supply and air exhaust conduits of a fixture in communication with the supply of gas and comprising the controllable gas valve. After completion of a euthanasia cycle as described, the cage rack is ready to resume use as an animal housing system as shown in Fig. 2.

A practical embodiment of the invention is shown in Figs. 4-6 as well as 10-12. The controller 50 is generally contained in a wall mounted cabinet having indicators for gas pressure, indicator lights for status indications and switch controls for operation. The face of the controller cabinet defines a control panel and indicates on/off status, the selected operation and the present phase in the operation. The controller includes indications of when the process is operated and when the process has been completed, for example a green light to show that the cages can safely be removed, e.g., for disposal of animal carcasses.

In a preferred arrangement, a switch key is used for activation. Upon commencement of a cycle, the PLC 50 turns off the supply blower 32 which has been providing cages with respiration air, such as HEPA-filtered room air; activates closure of the gate damper valve 127, thereby isolating the supply blower conduit so as to prevent backflow of gas along the supply conduit. A solenoid valve is opened, allowing CO2 to enter the supply plenum 76, flowing from there to the shelf ducts and into the cages 24. The solenoid valve can be mounted in series with a high flow pressure regulator 132, a manual shutoff valve 134, and a quick connect fitting for coupling with a pressurized gas cylinder 42 (shown in Figs. 1 and 7).

The exhaust blower 34 preferably remains on for almost the entire insufflation phase and aids gas distribution into the cages 24. At the end of this phase, the PLC turns off the exhaust blower 34. Preferably at this point, especially if the various connections along the ventilation flow path are snugly sealed, the solenoid valve 44 controlling CO₂ gas inflow is closed. It is also possible to continue the CO₂ gas inflow pressure, although the exhaust blower is off, but it should be appreciated that leakage gas could be released into the room. To deal with such leakage, a floor inlet 142 can be provided in the general area to extract air near the floor level containing CO₂ gas. Normally with no flow being driven by the blowers 32, 34, the CO₂ gas in the cages settles to the lowest elevation and remains at a lethal concentration.

The animals in the cages 24 are exposed to CO₂ gas during the insufflation phase, and to lethal concentrations of CO₂ gas in the subsequent soak phase, which is held for a sufficient time to ensure euthanasia, e.g., 15 minutes.

At the end of the timed soak phase, the gate damper 127 is opened. Both the exhaust and supply blowers 34, 32 are activated. Room air is drawn in through the filters associated with the inlet conduit 62, passed through the respective ducts and cages to the exhaust conduit 64, and purges the cages of CO₂ gas.

The system of the invention can be ducted to an outdoor discharge, or can be simply ducted to the building HVAC system exhaust line, provided the capacity is such that the volume of CO₂ gas is appropriately diluted and/or safely routed. In the vicinity of the euthanasia system, where a concentration of CO₂ gas could present problems, the exhaust is preferably passed, through a thimble connection to prevent local CO₂ gas release into the room air.

The controller 50 preferably can be set to different timed cycles depending on the operator's selection, e.g., programmed to selectively execute up to six different cycles. The duration of each cycle can be varied. The valves and the blowers can be selectively opened/closed or turned on/off during these cycles. The valves also can be arranged to open by incremental or proportional amounts, and the blowers can be operated at less than full power or at selected rates in a range of available variable speeds, in phases of operation maintained by outputs from controller 50.

A two minute insufflation period, and a 15 minute soak cycle were found to be effective for euthanizing mice greater than seven days of age. Neonates were found to require excessive soak time and/or substantial use of CO₂ gas.

According to the invention, the mice or other animals need not be removed from their home cage to another cage. No additional animals typically are added to the cage prior to euthanasia. There is little unusual activity. As a result of these factors, animal stress is substantially eliminated and personnel labor is reduced compared to other techniques. As described above, the system incorporates a number of features to ensure compassionate animal treatment and personnel safety and convenience.

Among the safety and operational aspects, the CO₂ gas application and control apparatus has a standard exhaust blower box with a keyed plug and a modified supply blower box. Neither blower box is standard to any rack, making it unlikely that the CO₂ gas system can be inadvertently engaged to a cage rack by an inexperienced worker.

Modifications to the supply blower and conduit include the added supply gate valve 127 and the high flow pressure regulator valve 136 that has been specially configured and sized to dispense CO₂ gas at a flow rate and pressure that approximates the conditions at which the normal supply blower would provide respiration air if activated.

The safety features built in to prevent dangerous operating conditions include two pressure sensing switches (one at the supply and one at the exhaust) to monitor the integrity of the supply and exhaust connections during the respiration air ventilation state. Such pressure monitoring is known in caging systems and can generate an alarm condition if pressure and suction levels suggest a blockage or leak. However, according to the invention, an alarm state in these pressure and suction levels is sensed by controller 50. The controller is programmed so as not to allow a CO₂ gas cycle to commence if a connection problem or anomaly is sensed.

Similarly, if a problem in the availability of CO₂ gas through the fixture is sensed, the controller can refrain from commencing a cycle. Thus if the available gas supply pressure is inadequate, if a connection line is decoupled or leaking, etc., the cycle is not started and a fault light or alarm can so indicate. As another fail safe, the position of the gate valve 127 can be sensed using a limit switch contact closure coupled to controller 50. If the gate valve 127 is not sensed to be closed, the controller can refrain from opening control valve 132 for release of CO₂ gas, thereby preventing backflow of CO₂ gas on the supply side.

The CO₂ gas valve is spring biased to close. In the event of a power failure, the CO₂ gas valve closes immediately. When power resumes, the controller assumes a default animal-maintenance starting state. An alarm light can be activated to indicate this occurrence as another error condition. For humane reasons, it is desirable in the event of a commence euthanasia cycle, to complete the cycle and not to risk the possibility of injuring but not euthanizing the animals. Also for this reason, the available CO₂ gas volume can be sensed, e.g., by available pressure or by tank weight, and no cycle commenced if the pressure or volume appear to be marginal for completing a cycle until the CO₂ tank is changed.

The PLC monitors the safety features as inputs, together with user selections and switches. The PLC outputs closures for application of power to the valves and blowers or to motor starter relays or solid state switches, etc. The PLC sequence is selected in part from programming and in part from user selection switches, and an internal clock is used for timing the sequencing from one selected stage or phase to the next.

The PLC program can be arranged to be downloaded remotely over a phone modem (not shown). The program can be contained in nonvolatile memory such as a programmed ROM. The control of the euthanasia system can be one of a number of control aspects associated with controls in an animal housing facility, e.g., as subroutines in a larger control scheme run on a PC or the like.

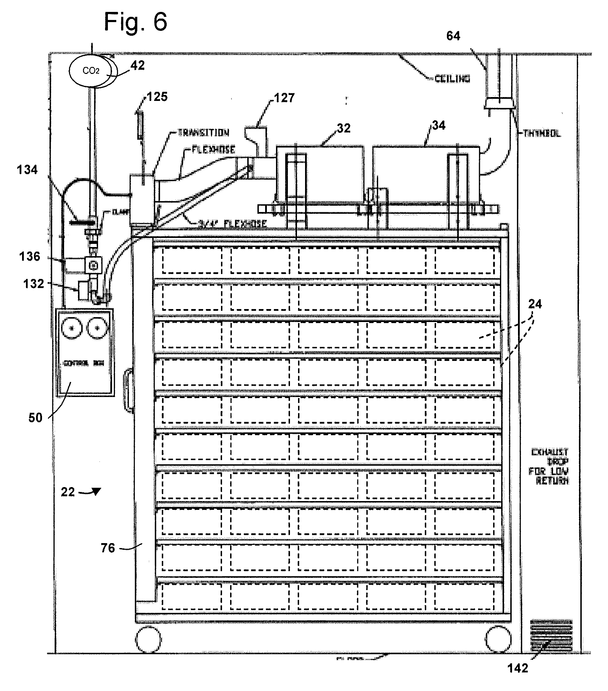

In the practical embodiment of Fig. 6, the initial setup procedure includes adjusting the CO₂ gas pressure. First the manual gas valve on the tank is opened. The CO₂ gas pressure from the tank is set to a nominal level, e.g., 8 PSI, that is higher than the regulated operational pressure that will be used. The controller 50 has a selector switch for selecting the program or sequence to be operated, and for setup the selector is switched, e.g., to Program #1. The operator turns the "start" key switch, opening gas valve 44. At this point, the high flow rate regulator valve 132 is manually adjusted, preferably quickly, to get an 0.20 to 0.30" H₂O column pressure (preferably 0.20 - 0.25") on the magnehelic pressure meter of the controller 50. The gas system is then set up. The operator presses "stop" and the euthanasia system is ready to be coupled to a cage rack.

A standard unmodified cage rack is wheeled into position under the euthanasia transition hookups, normally suspended using wall bracket arrangement 125. The transition is dropped from the bracket and clamped in place on the rack with quick connect clamps that correspond to the standard ventilation hookups on the racks. The supply and exhaust blowers are powered and operate to ventilate the cage boxes in the rack. The operator should verify that supply air pressure is close to nominal (e.g., 0.2 ― 0.25" H₂O) and exhaust pressure is close to nominal (e.g., 0.15 - 0.20" H₂O). If not, the respective connections should be checked and necessary damper adjustments made. The controller 50 will decline to initiate operation for the euthanasia cycle if sensed pressures are not near nominal.

It is possible to inject CO₂ at a lower pressure during a euthanasia cycle (for a slower gas feed) than in the ventilation air "maintain" state. For this purpose, a variable speed exhaust blower and/or damper arrangement can be substituted for a simple on/off exhaust blower arrangement. In that case, the controller operates the exhaust blower at a higher level in the maintain state and at a lower level at the beginning of the euthanasia cycle, so as to match the lower CO₂ injection pressure.

It is an aspect of the invention that the CO₂ gas is handled at pressure differentials that are comparable to the pressure differentials in the ventilation air "maintain" state. Thus the high flow rate - low pressure regulator valve 136 provides CO₂ gas in lieu of oxygen carrying air during the euthanasia cycle, but at very similar flow conditions. This is an improvement over injecting CO₂ gas simply by opening flow to orifices from a pressurized gas supply into the ventilation air supply or into the individual shelf ducts. Releasing gas at orifices near the cages can cause rapid substantial cooling (due to the gas pressure drop), noise and other adverse effects.

There are potential different gas application requirements for different animals. As mentioned above, the CO₂ gas euthanasia technique may not be suitable for infant mice, due to the long CO₂ gas soak time that might be necessary for complete effectiveness. On the other hand, certain genetically altered or weakened animals, being more sensitive, may advantageously be subjected to a slower gas feed to further minimize stress.

In the maintain state, the rack can remain in place and coupled to the inoperative euthanasia system while being supplied with ventilation air for respiration. This state can remain as long as desired.

In commencing a euthanasia cycle, connections should be checked and pressures monitored before pressing the start button, and status indicators should be observed when attempting to commence a cycle, to take due note of fault indications requiring attention. As the cycle commences, the controller 50 monitors operations and provides the necessary outputs to complete the cycle without continued attention.

The invention has been described in connection with certain examples and advantageous features. These examples are not intended to be limiting, and reference should be made to the appended claims rather then foregoing discussion of examples, to assess the scope or the invention in which exclusive rights are claimed.

In summary, a high density animal housing system with an air source conduit and an air exhaust conduit is disclosed which is normally coupled to one or more ventilating animal cage racks through standard inlet/outlet fittings. A euthanasia fixture is coupled into the standard inlet/outlet fittings and selectively and sequentially operates valves and/or blowers to switch from supply of respiration air to a gas supply, to open and close the flow to the exhaust and to resume ventilation afterwards, for venting. The sequence is timed and controlled by a programmable controller that activates the associated blowers and valves automatically to follow a user selected sequence. The system anesthetizes and then euthanizes the animals via the same flow conduits that otherwise supply respiration air, requiring no rack modifications and little if any human attention other than to couple the rack to the ventilation system at the euthanasia fixture. Operator inputs allow selection among sequences. Status sensing inputs prevent initiation or continuation of a cycle in the event of certain faults.

## Claims

1. An animal housing system comprising:
a ventilation system having an air source conduit and an air exhaust conduit for normally supplying air for respiration of animals;
a plurality of animal cages, each of the cages comprising an air impermeable material at least partly surrounding a housing area for the animals;
a support rack for the animal cages, configured such that when the cages are placed in said support rack, the animal cages are coupled between the air source and air exhaust conduits of the ventilation system, thereby supplying occupants of the animal enclosures with air for said respiration;
a supply of gas coupled to the air source conduit by a controllable valve, wherein the controllable valve is operable to displace at least part of said air for respiration, for at least one of anesthetizing and asphyxiating said animals while disposed in said cages in said support rack;
wherein the gas supply is external to the support rack and is activated by timed operation of the controllable valve.

2. The system of claim 1, wherein the cages comprise impermeable boxes suspended from hollow shelves with internal conduits coupled to said supply and exhaust conduits, and wherein the supply of gas is coupled between the ventilation system and the support rack.

3. The system of claims 1 or 2, further comprising at least one valve for controllably coupling one of the respiration air and the supply of gas to the air source conduit, the supply of gas preferably comprising pressurized CO₂ gas.

4. The system of claim 3, further comprising a programmable controller coupled operate to the controllable valve, wherein the controller operates the valve in a series of successive operations.

5. The system of claim 4, wherein further comprising a timer coupled with the controller, for stepping through the series of successive operations in a timed sequence.

6. The system of claim 5, wherein the timed sequence is selected from among a plurality of user-selectable sequences.

7. The system of claim 4, further comprising at least one controllable blower coupled to at least one of the air source and air exhaust conduits, and wherein the controller is programmed to couple and decouple the controllable blower for controlling passage of air and gas to the exhaust conduit.

8. The system of claim 6, comprising a controllable supply blower, a controllable exhaust blower and at least one valve operable by the controller, wherein the controller is programmed to control said supply blower, exhaust blower and valve for coupling the respiration air and the gas exclusively to the air source conduit for a time, and for coupling and decoupling at least one of the supply blower and the exhaust blower, so as to effect a sequence of insufflation, soak and venting operations.

9. The system of claim 8, wherein the sequence of insufflation, soak and venting operations are timed to anesthetize and then asphyxiate the animals and then to discharge the gas.

10. The system of claim 8, wherein the controller is programmed to effect an insufflation phase wherein the supply of gas is substituted (or is substituting) said air for respiration during a first time period, and a (or is) timed for distribution of the gas and a soak phase.

11. The system of claim 8, wherein the support rack is detachable from an existing set of air supply and air exhaust conduits and coupleable to a set of air supply and air exhaust conduits of a fixture in communication with the supply of gas and comprising said controllable valve.

12. A method of euthanizing laboratory animals, comprising:
housing the animals in a ventilated caging system wherein air supply and air exhaust conduits are coupled to plural substantially air impervious cage boxes containing animals, for passing a current into and through the cage boxes, the current initially containing respiration air with an oxygen concentration supporting respiration;
substituting for the air supply a source of gas, thereby displacing the respiration air in the current passing into the cage boxes, while continuing the current for a sufficient time substantially to insufflate the cage boxes with the gas, wherein said substitution is accomplished partly by coupling the source of gas between the ventilated caging system and the air supply, and partly by controlling the exhaust conduits;
halting the current for a predetermined time period after the cage boxes have been insufflated, whereupon the gas in the cage boxes asphyxiates the animals; and,
resuming the current using respiration air, thereby flushing the gas the exhaust conduit;
wherein said substituting, halting and resuming steps include activating and deactivating outputs of a controller to automatically sequence operations of at least one of a valve and a blower affecting the current.
